# EUROPEAN PATENT APPLICATION

(11) **EP 2 641 520 A2**
(43) Date of publication of application: **25.09.2013**
(21) Application number: 13160061.1
(22) Date of filing: 19.03.2013
(51) Int. Cl.: A47K 3/17

(54) **Height adjustable support means**

(30) Priority: 19.03.2012 NZ 59888612
(71) Applicant: Markon Holdings Limited, Glendene, Auckland 0602 (NZ)
(72) Inventor: Marks, Kipley Roydon, Auckland 1071 (NZ)
(74) Representative: Richardson, Mark Jonathan

(57) **Abstract**

An adjustable support means 100 for a bathroom fitting or the like comprises a first member 1 threadably engaged with a second member 4. A third member 5 is also threadably engaged with the second member 4. The first and third members 1, 5 are arranged in a non-rotating relationship, wherein rotation of the second member 4 in a first rotational direction relative to the first and third members 1, 5 causes relative movement between the first and third members 1, 5. The second member 4 is provided with reel means 15 for receiving a flexible member 17 which can be used to rotate the second member 4.

## Description

The present invention relates to a height adjustable support means, and in particular, but not exclusively, to a height adjustable support means for use with bathroom fixtures.

### BACKGROUND ART

One difficulty with installing fixtures in bathrooms and the like at present is that it is difficult and time consuming to set the fixture up so that it is level. This is in part due to the limited space available, and is complicated by the large loads such fixtures (in particular baths) may need to bear in use.

Currently one method used to install a bath is to use a cement and sand slurry. When cured, the slurry transmits the weight of the water and user directly into the floor. This system works well in use, but is slow and expensive to install.

### OBJECT OF THE INVENTION

It is an object of the invention to provide a compact height adjustable support means which can bear a required amount of weight and which is easy to adjust to a required height, or to at least provide the public with a useful choice.

### BRIEF SUMMARY OF THE INVENTION

According to one aspect of the present invention there is provided an adjustable support means comprising a first member having a threaded portion which is engaged with a complementary first threaded portion of a second member, and a third member having a threaded portion which is engaged with a complementary second threaded portion of the second member, the centre of the first threaded portion being substantially collinear with the centre of the second threaded portion,
the first and third members arranged in a non-rotating relationship, wherein rotation of the second member in a first rotational direction relative to the first and third members causes relative movement between the first and third members, and
wherein the second member is provided with reel means for receiving a flexible member.

Preferably the adjustable support means further comprises a flexible member engaged with the reel means.

Preferably the reel means comprises a pair of spaced apart radially extending flanges.

Preferably the reel comprises an annular wall provided between the flanges.

Preferably a diameter of the annular wall is greater than a diameter of the threaded portions.

Preferably rotation of the second member in the first rotational direction causes opposing ends of the first and third members to move further apart.

Preferably the second member is provided with retaining means for retaining one end of the flexible member, in use.

Preferably one of said first threaded portion and said second threaded portion is an internal thread, and the other is an external thread.

Preferably the first member is provided with mounting means at an opposite end of the first member to the threaded connection with the second member.

Preferably the third member is provided with foot means at an opposite end of the third member to the threaded connection with the second member.

Preferably the adjustable support means further comprises a fourth member engaged with the first member and the second member, wherein the engagement with the first member allows relative longitudinal movement but does not allow relative rotation, and the engagement with the second member allow relative rotation but does not allow relative longitudinal movement.

Preferably the first member comprises a longitudinally extending rib, and the fourth member comprises a complementary groove slideably engaged with the rib.

Preferably one of the second member and the fourth member comprises an annular rib, and the other comprises an annular groove engaged with the rib.

Preferably the fourth member comprises the annular groove and the second member comprises the annular rib which is engaged with the groove.

Preferably the fourth member is engaged with the third member, wherein the engagement allows relative longitudinal movement but does not allow relative rotation.

Preferably one of the fourth member and the third member has a longitudinally extending rib, and the other has a complimentary longitudinally extending groove which is engaged with the rib.

Preferably the fourth member is provided with a longitudinally extending rib and the third member has a complementary longitudinally extending groove which is engaged with the rib.

According to a second aspect of the present invention there is provided a method of installing a fixture above a support surface comprising:
i. engaging the adjustable support means of the first aspect with the fixture;
ii. temporarily positioning the fixture in a required position;
iii. pulling the flexible member to thereby cause rotation of the second member and thus extension of the first member relative to the third member, wherein the rotation of the second member is continued until the adjustable support means is in contact with the fixture and the support surface.

The invention may also be said broadly to consist in the parts, elements and features referred to or indicated in the specification of the application, individually or collectively, in any or all combinations of two or more of said parts, elements or features, and where specific integers are mentioned herein which have known equivalents in the art to which the invention relates, such known equivalents are deemed to be incorporated herein as if individually set forth.

According to a still further aspect of the present invention, a height adjustable support member is substantially as herein described, with reference to the accompanying drawings.

Further aspects of the invention, which should be considered in all its novel aspects, will become apparent from the following description given by way of example of possible embodiments of the invention.

### BRIEF DESCRIPTION OF THE DRAWINGS

- Figure 1: is a side elevation of a height adjustable support means of the present invention with the cord not shown for clarity.
- Figure 2: is a vertical cross-section through a height adjustable support means of the present invention which is identical to embodiment shown in Figure 1, except that the fitting to which it is connected is inverted.
- Figure 3: is an enlargement of section "A" of Figure 2, showing the top of the fourth member.

### BRIEF DESCRIPTION OF PREFERRED EMBODIMENTS OF THE INVENTION

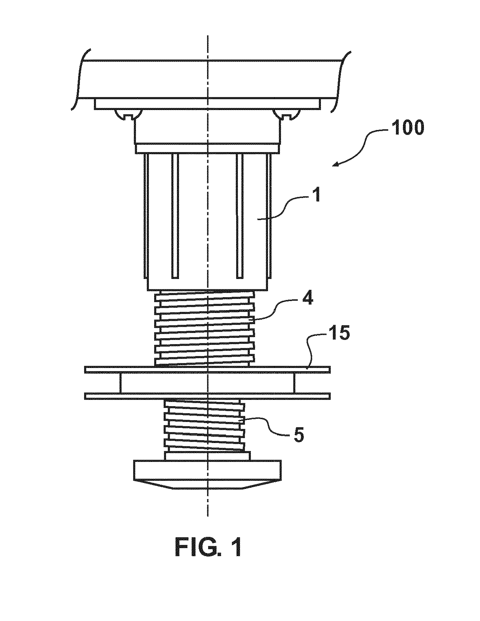

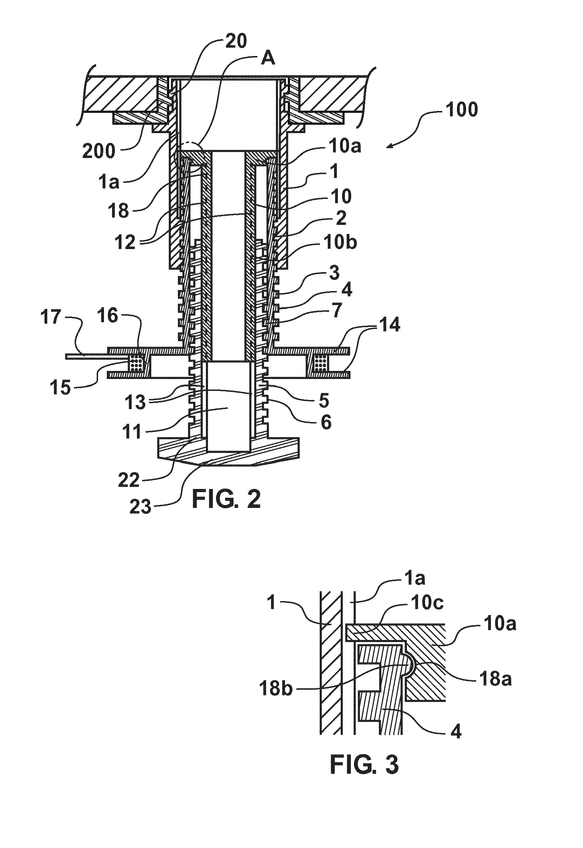

Referring to Figures 1 and 2, a height adjustable support means according to one embodiment of the present is generally referenced by arrow 100.

The support means comprises a first member 1 which has a threaded portion 2 which is engaged with a complementary threaded portion 3 of a second member 4.

A third member 5 is provided which has a threaded portion 6 which is engaged with a complementary threaded portion 7 of the second member. The centres of threaded portions 3, 7 are substantially collinear, that is, the threaded portions 3, 7 are substantially concentric, but may be axially offset.

The first and third members 1, 5 are arranged so that they are able to move longitudinally relative to each other, but are not capable of relative rotation. In the embodiment shown the first member 1 is engaged with a fourth member 10 which comprises a base part 10a and a column part 10b. The column part 10b extends into a hollow portion 11 of the third member 5 in a sliding fit. The column 10b is keyed to the hollow portion 11. In the example shown the column 10b is provided with two ridge or rib formations 12 which engage complementary grooves 13 in the third member 5, although in other embodiments (not shown) the ribs may be provided on the third member 5 and the grooves on the fourth member. Any suitable number of ribs and complementary grooves may be used. In some examples (not shown) the arrangement may resemble a splined shaft.

The base 10a of the fourth member 10 is engaged with the first member 1 in a sliding, non-rotating fit and with the second member 4 in a rotating, non-sliding fit. As best seen in Figure 3, the base 10a is provided with a groove 10c which engages a longitudinal rib 1 a provided on the first member 1. The base 10a is also provided with an annular groove 18a which engages with an radially inwardly protruding annular rib 18b provided on the second member 4. Again, the relative positions of the grooves and the ribs may be reversed in some embodiments.

The threaded portions 2, 3, 6, 7 are arranged such that rotation of the second member 4 relative to the first and third members 1, 5 causes the relative longitudinal movement between the first and third members 1, 5. In the embodiment shown threaded portions 2 and 3 are right hand threads and threaded portions 6 and 7 are left hand threads.

So that a user can rotate the second member 4 when the support means 100 is installed in a relatively small space, the second member 4 is provided with two spaced-apart radially extending flanges 14 which define a bobbin or reel formation 15. The reel formation 15 may also comprise an annular wall 16 to act as a base of the reel 15. In other embodiments (not shown) the flanges 14 may be of minimal size, or omitted entirely.

In use, a flexible member such as a suitable cord 17 may be wrapped around the reel formation 15. In some embodiments a suitable retaining means (not shown) may be provided to fasten one end of the cord 17 to the reel. In some embodiments this retaining means may be temporary retaining means, so that the cord can be removed from the reel after use.

When a user wants to use the adjustable support means 100 to support a fixture, the user typically engages the support means with the fixture and then positions the fixture above a support surface (typically the floor) and pulls the free end of the cord 17, thereby causing rotation of the second member 4, and extension of the third member 5 relative to the first member 1. The cord is pulled until the support means is in contact with both the support means and the fixture.

In many embodiments the adjustable support means may be connected to the fixture before the fixture is moved into position, although in some cases the adjustable support means may be connected to the fixture after it has been moved into position.

In a preferred embodiment the annular wall 16 may have a larger diameter than the threaded portions 3, 7, so as to increase the torque on the second member which is created by pulling the cord 17.

Once the height adjustable support means 100 has been extended to its required length, it is able to support the weight of the fitting to which it is attached.

Various means of attaching the height adjustable support means 100 to the fixture or fitting are available. In one embodiment the distal end of the first member 1 may be provided with a threaded portion 20 (as shown in Figure 2) which engages a complementary threaded portion of the fitting 200. In another embodiment the threaded portion 20 of the first member 1 may be engaged with the inverted fitting 200 (as shown in Figure 1) which is surface mounted to a fixture by means of suitable fasteners such as screws.

The opposite end 22 of the third member 5 is typically provided with a foot 23.

Those skilled in the art will appreciate that alternative forms of the invention described are possible. For example, in one embodiment (not shown) the first member may be provided with an externally threaded portion and the third member may be provided with an internally threaded portion. In another embodiment (not shown) the first and third members may be provided with externally threaded portions and the second member may be provided with internally threaded portions.

The present invention may be useful in any situation where a fitting or fixture needs to be mounted level, for example for baths, vanities and the like in the bathroom and/or for kitchen cabinetry.

Unless the context clearly requires otherwise, throughout the description and the claims, the words "comprise", "comprising", and the like, are to be construed in an inclusive sense as opposed to an exclusive or exhaustive sense, that is to say, in the sense of "including, but not limited to".

Where in the foregoing description, reference has been made to specific components or integers of the invention having known equivalents, then such equivalents are herein incorporated as if individually set forth.

Although this invention has been described by way of example and with reference to possible embodiments thereof, it is to be understood that modifications or improvements may be made thereto without departing from the spirit or scope of the appended claims.

## Claims

1. An adjustable support means comprising a first member having a threaded portion which is engaged with a complementary first threaded portion of a second member, and a third member having a threaded portion which is engaged with a complementary second threaded portion of the second member, the centre of the first threaded portion being substantially collinear with the centre of the second threaded portion,
the first and third members arranged in a non-rotating relationship, wherein rotation of the second member in a first rotational direction relative to the first and third members causes relative movement between the first and third members, and
wherein the second member is provided with reel means for receiving a flexible member.

2. The adjustable support means of claim 1 further comprising a flexible member engaged with the reel means.

3. The adjustable support means of claim 1 or 2 wherein the reel means comprises a pair of spaced apart radially extending flanges.

4. The adjustable support means of claim 1, 2 or 3 wherein rotation of the second member in the first rotational direction causes opposing ends of the first and third members to move further apart.

5. The adjustable support means of claim 1, 2, 3 or 4 wherein one of said first threaded portion and said second threaded portion is an internal thread, and the other is an external thread.

6. The adjustable support means of any one of claims 1 to 5 wherein the first member is provided with mounting means at an opposite end of the first member to the threaded connection with the second member.

7. The adjustable support means of any one of claims 1 to 6 wherein the third member is provided with foot means at an opposite end of the third member to the threaded connection with the second member.

8. The adjustable support means of any one of claims 1 to 7 further comprising a fourth member engaged with the first member and the second member, wherein the engagement with the first member allows relative longitudinal movement but does not allow relative rotation, and the engagement with the second member allow relative rotation but does not allow relative longitudinal movement.

9. The adjustable support means of claim 8 wherein the first member comprises a longitudinally extending rib, and the fourth member comprises a complementary groove slideably engaged with the rib.

10. The adjustable support means of claim 9 wherein one of the second member and the fourth member comprises an annular rib, and the other comprises an annular groove engaged with the rib.

11. The adjustable support means of claim 10 wherein the fourth member comprises the annular groove and the second member comprises the annular rib which is engaged with the groove.

12. The adjustable support means of any one of claims 8 to 11 wherein the fourth member is engaged with the third member, wherein the engagement allows relative longitudinal movement but does not allow relative rotation.

13. The adjustable support means of claim 12 wherein one of the fourth member and the third member has a longitudinally extending rib, and the other has a complimentary longitudinally extending groove which is engaged with the rib.

14. The adjustable support means of claim 13 wherein the fourth member is provided with a longitudinally extending rib and the third member has a complementary longitudinally extending groove which is engaged with the rib.

15. A method of installing a fixture above a support surface comprising:
i. engaging the adjustable support means of claim 2 with the fixture;
ii. temporarily positioning the fixture in a required position;
iii. pulling the flexible member to thereby cause rotation of the second member and thus extension of the first member relative to the third member, wherein the rotation of the second member is continued until the adjustable support means is in contact with the fixture and the support surface.
